Europäisches Patentamt

(19) European Patent Office

Office européen des brevets

(11) Publication number: **0 066 382**
**B1**

(12) **EUROPEAN PATENT SPECIFICATION**

(45) Date of publication of patent specification: **12.03.86**

(21) Application number: **82302364.3**

(22) Date of filing: **10.05.82**

(51) Int. Cl.⁴: **C 08 L 51/04,** C 08 L 33/04, C 08 L 55/02 // C08L27/06, C08F279/00

(54) Bulk flowable impact modifier particles, processes for making them and compositions containing them.

(30) Priority: **01.06.81 US 269116**

(43) Date of publication of application:
**08.12.82 Bulletin 82/49**

(45) Publication of the grant of the patent:
**12.03.86 Bulletin 86/11**

(84) Designated Contracting States:
**AT BE CH DE FR GB IT LI NL SE**

(56) References cited:
**GB-A-2 044 779**

(73) Proprietor: Rohm and Haas Company
Independence Mall West
Philadelphia, Pennsylvania 19105 (US)

(72) Inventor: Grandzol, Richard John
121 West Oakland Avenue
Doylestown Pennsylvania 18901 (US)
Inventor: McFaull, Albert James
No.5 Delsol Place
Sicklerville New Jersey 08081 (US)
Inventor: Wanger, Willard Hunter
1110 Gravel Hill Road
Southampton Pennsylvania 18966 (US)
Inventor: Rabinovic, Ismael Samuel
Mas Longi MA1 Blvd.Des Cretes
F-06210 La Napouli (FR)

(74) Representative: Angell, David Whilton et al
Rohm and Haas Company Patent Department
Chesterfield House Bloomsbury Way
London WC1A 2TP (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention is concerned with bulk flowable impact modifier particles, processes for making them and compositions containing them. The field of the invention is the handleability of impact modifier polymers of the type which are used to modify poly (vinyl chloride) (PVC) and/or other polymers.

Graft polymeric impact modifiers are generally used in hard polymers such as PVC, styrene resins, styrene/acrylonitrile (SAN) and methylmethacrylate (MMA) resins. These graft polymers are typically prepared by emulsion polymerization of such monomers as butadiene, butadiene and styrene, lower alkyl esters of acrylic acid and isoprene to form an elastomeric polymer onto which is grafted a hard polymer, typically containing methyl methacrylate, styrene, and/or acrylonitrile units, for example. When the graft polymer impact modifiers are isolated by coagulation with an acid or a salt and then dehydrated and dried to obtain a polymer, especially when the impact modifier has a high elastomer level, the modifier often agglomerates during storage and can clog or block transportation lines. This is generally referred to as a flowability problem. One solution to this problem has been proposed in U.K. Patent Application 2,044,779 which teaches blending 0.1 to 25 parts of a graft polymer comprising 5 to 49% of an elastomeric trunk polymer and 95 to 51% of a branch polymer of a hard resin producing monomer grafted on the elastomeric trunk polymer to improve the powder flow and compaction properties of graft polymer impact modifiers. According to the British patent, Comparison Example 3, it is very important that the additive polymer be a graft containing an elastomeric trunk polymer, because when the copolymer was tried without elastomeric trunk polymer, it caused the impact modifier polymer to possess notably poor ability to impart impact strength to PVC, and the PVC resin compositions obtained therefrom had numerous fish eyes, i.e., the modifier had a dispersability problem in PVC.

The polymers containing the elastomeric phase which is taught by the prior art to be essential to improve the bulk flow and impact properties have significant disadvantages however. They are special polymers containing special low rubber levels and must be prepared just for this application. They also have several disadvantages arising from the fact that they contain the elastomeric phase.

We have now found compositions in which the presence of these special polymers can be avoided while providing bulk flow characteristics with desirable impact efficiency and dispersability.

In our invention, coagulated impact modifier particles are coated or agglomerated with hard, non-elastomeric high molecular weight polymer. This can be achieved by introducing an emulsion of hard, non-elastomeric polymer into a slurry of coagulated impact modifier polymer, then coagulating and drying the resultant blend so as to product impact modifier particles coated or agglomerated with the hard polymer. The coated or agglomerated particles have good powder flow, bulk density, and caking tendency properties. The resulting coagulated or agglomerated particles preferably have an average particle diameter of 80—250 nm (800Å to 2500 Å).

Suitable impact modifier polymers usually contain 50 to 90% by weight of elastomeric polymer and may for example be prepared by polymerization of 50 to 90 parts of elastomeric polymer by emulsion polymerization, and sequential polymerization thereon, preferably with grafting thereto, of 10 to 50 parts of hard resin-producing monomer(s) in one or more subsequent stages (corresponding to the branch polymer in the prior art mentioned. In some cases the elastomeric stage is not the first stage above. These polymers are conventional and well known in the art. The elastomeric polymer (corresponding to the trunk polymer in the prior art mentioned above) is conveniently prepared from butadiene, isoprene, chloroprene, alkylacrylate having 4 to 10 carbon atoms in the alkyl group, and optional additional monomers copolymerizable therewith, such as styrene, alpha-methyl styrene, methyl methacrylate, acrylonitrile and methacrylonitrile. The subsequent stage or stages can be prepared from monomers comprising more than 50% by weight of one or more hard resin-producing monomers such as methyl methacrylate, ethyl methacrylate, butyl methacrylate, acrylonitrile, methacrylonitrile, vinyl chloride, vinyl bromide, styrene and alpha methylstyrene, singly or in mixtures, and in one or more stages. These polymers are typically known as MBS, ABS, ABSN, and AAS resins, for example.

The hard, non-elastomeric polymer used in the present invention to improve the impact modifier polymers typically has a glass transition temperature of at least 25°C, and is usually prepared from a monomer system comprising of at least 80% by weight of one or more of the monomers; methyl methacrylate, styrene, alpha methylstyrene, butyl methacrylate, other methacrylates having up to 8 carbon atoms in the alcohol moiety, acrylonitrile, methacrylonitrile and vinyl chloride. The balance (if any) of the monomers in the monomer system can be any other copolymerizable, ethylenically unsaturated monomer(s) for example "softer" monomers such as acrylates having one to four carbons in the alkyl group. Crosslinking monomers will usually not be present. An especially preferred hard polymer is a copolymer of methyl methacrylate and ethyl acrylate in a weight ratio of 99:1 to 80:20. The hard polymer preferably has a viscosity average molecular weight above 100,000, more preferably above 800,000. A typical molecular weight of such a polymer would be about one million. The hard polymer is prepared by emulsion polymerization. In some cases the elastomer stage is not the first stage.

It is well known that the higher the elastomer percentage in such grafted impact modifiers, the greater the impact efficiency will be. However, it is also known that with greater elastomeric content, powder flow problems and caking problems increase. The present invention allows for more highly efficient impact modifiers, i.e., higher elastomeric contents, and yet permits production of highly bulk flowable modifiers.

Although the products of the invention can be made by other techniques for intimately mixing the impact modifier polymer and the hard polymer, an especially preferred method, to ensure that coating and/or agglomeration is achieved, comprises introducing an emulsion of the hard non-elastomeric polymer to a slurry of coagulated impact modifier polymer. Typically this takes place by adding an emulsion of the hard polymer in the coagulation tank of the impact modifier polymer, and results in the impact modifier particles being coated with the hard polymer. The coagulation and isolation process is then followed with the usual dehydration to obtain the improved impact modifier polymers of the present invention. The weight ratio of hard polymer to impact modifier polymer is 0.1:99.9 to 10:90, preferably 0.5:99.5 to 5:95, and most preferably 1:99 to 3:97.

The bulk flowable impact modifier compositions of the invention are useful for blending with hard resins such as homopolymers and copolymers of vinyl chloride, styrene and/or methyl methacrylate, in ratios of 1 to 40 parts of the modifier composition to 100 parts of the hard resin.

The following Examples, in which all parts and percentages are by weight unless otherwise indicated, illustrate a few preferred embodiments of the invention.

Example 1

(a) Preparation of impact modifier polymer.

A monomer mixture comprising 0.15 part tertiary butyl hydroperoxide, 55 parts of butadiene mixed with 1.0 parts of divinyl benzene and 18 parts of styrene 0.001 parts of ferrous sulfate, 0.005 parts of EDTA (disodiumethylenediamine tetra acetate), 0.15 part of formaldehyde sodium sulfoxylate and 135 parts of distilled water mixed with 0.06 parts of sodium chloride, 1.2 parts sodium stearate were charged into an autoclave provided with a stirrer. The resulting mixture was subjected to polymerization at 65°C for 14 hours.

A monomer mixture comprising 0.15 parts of tertiary butyl hydroperoxide, 14 parts of ethyl methacrylate mixed with 11 parts of styrene and 0.12 parts of formaldehyde sodium sulfoxylate were added to this latex (solid content 75 parts) and the resulting mixture was subjected to polymerization at 60°C for five hours. An emulsion of 0.2 parts of Topanol CA (believed to be 4,4',4'' - (1 - methyl - 1 - propanyl - 3 - ylidene)tris[2 - (1,1 - dimethylethyl) - 5 - methyl - phenol] and 0.6 parts of dilauryl thiodipropionate were then added to stabilize and yield a latex of graft copolymers (solids content 100 parts). (Topanol is a trademark which may be registered in some or all of the designated States).

(b) Preparation of non-elastomeric, hard copolymer.

A monomer mixture comprising 0.1 parts of hydrogen peroxide 90 parts of MMA mixed with 10 parts of EA, 0.2 parts of formaldehyde sodium sulfoxylate, and 233 parts of distilled water mixed with 0.04 parts of sodium chloride, 1.0 parts of sodium lauryl sulfate were charged into a reaction vessel provided with a stirrer. The resulting mixture was subjected to polymerization initiated at 25—30°C and continues for four hours to yield a latex of non-elastomeric copolymer (solids content 100 parts).

(c) Blending of impact modifier polymer and hard polymer.

100 parts of the impact modifier latex graft copolymer (solid content: 40 parts) of Example 1(a) was added to 300 parts of a 0.25% acetic acid and 0.3% sodium chloride solution at 35°C. Thereafter the slurry was heated to 75°C. Thereafter the hard copolymer latex of 1(b) was added to the coagulated slurry. The slurry was cooled and the pH was adjusted with phosphoric acid to 2.75. The resultant slurry was dewatered and dried.

Comparative experiment:

Coagulation of the impact modifier copolymer. 100 parts of impact modifier latex (solids content: 40 parts) of Example 1(a) without addition of hard polymer of 1(b) was added to 300 parts of a 0.25% acetic acid and 0.3% sodium chloride solution at 35°C. Thereafter the slurry was heated to 75°C to complete the coagulation process. The slurry was cooled and the pH was adjusted with phosphoric acid to 2.75. The resultant slurry was dewatered and dried.

Example 2

Testing for powder flow and impact strength.

The modifiers of Example 1(c) and the Comparative Experiment were examined for powder flow, bulk density, and compaction properties and were also incorporated in standard PVC formulations and tested for impact strength. The results are reported in the following table.

With respect to Example 1(c), and the Comparative Experiment, the Table shows the improvement of powder flow density and compaction properties with the presence of the hard copolymer. The Table also shows that no reduction in impact strength corresponded to the presence of the hard copolymer.

TABLE

| Composition of impact modifier and hard polymer blend | Example 1(c) | Comparative experiment |
|---|---|---|
| (1) Graft copolymer, polymer/hard resin | 75/25 | 75/25 |
| (2) Hard polymer of Example 1(b) quantity added (Solids basis) | 3 | — |
| Powder properties | | |
| (1) Flow rate (seconds/50g) ASTM D-1895-69 | 5 | 11 |
| (2) Bulk density (packed g/cc) | 0.45 | 0.32 |
| (3) Compaction (% caked after pressing/screening) | 0 | 20 |
| Properties of PVC compound | | |
| (1) PVC formulation/impact modifier | 100/13 | 100/13 |
| (2) Impact, notched Izod (23°C) J (ft./lbs.) | 21.96±0.4 (16.2±0.3) | 20.61±1.6 (15.2±1.2) |
| (3) Percent ductile breaks | 100 | 100 |

## Claims

1. A composition useful for the impact modification of such hard polymers as homopolymers and copolymers of vinyl chloride, styrene and/or methyl methacrylate comprising particles of impact modifier for the hard resin, the modifier containing at least two stages at least one of which is elastomeric and at least one of which is hard, which modifier is coated and/or agglomerated with hard polymer which does not contain an elastomeric stage, the weight ratio of the coated and/or agglomerated hard polymer to the impact modifier being 0.1:99.9 to 10:90.

2. A composition as claimed in Claim 1 wherein the ratio is 1:99 to 3:97.

3. A process for the production of a composition as claimed in any preceding claim which comprises coating and/or agglomerating the impact modifier particles with the hard polymer.

4. A process as claimed in Claim 3 which comprises introducing an emulsion of the hard, non-elastomeric polymer into a slurry of coagulated impact modifier polymer, then coagulating and drying the resultent blend.

5. A composition or process as claimed in any preceding claim wherein the elastomeric component comprises 50 to 90% by weight of the multistage modifier polymer.

6. A composition or process as claimed in any preceding claim wherein the hard, non-elastomeric polymer has a Tg of greater than 25°C and comprises at least 80% by weight of units of one or more of the monomers: methyl methacrylate, styrene, alphamethyl styrene and butyl methacrylate.

7. A composition or process as claimed in claim 6 wherein the hard polymer is a copolymer of methyl methacrylate and ethyl acrylate in a weight ratio of 99:1 to 80:20.

8. A composition or process as claimed in any preceding claim wherein the coagulated or agglomerated impact modifier particles have an average diameter of 80 to 250 mm (800 to 2500 Å).

9. A composition or process as claimed in any preceding claim wherein the impact modifier polymer is a multistage copolymer having a first, elastomeric stage and one or more subsequent harder stages.

10. A composition or process as claimed in any preceding claim wherein the elastomeric stage comprises units of one or more of the monomers: butadiene, isoprene, chloroprene, and alkyl acrylates having 4 to 10 carbon atoms and one or more of the hard stages comprises more than 50% by weight of units of ethyl methacrylate, methyl methacrylate, butyl methacrylate, styrene, alpha-methyl styrene, acrylonitrile, methacrylnitrile, vinyl bromide and/or vinyl chloride.

## Patentansprüche

1. Masse, die für die Schlagfestigkeitsmodifizierung von harten Polymeren, wie Homopolymeren und Copolymeren von Vinylchlorid und/oder Methylmethacrylat geeignet ist, aus Teilchen aus einem Schlagfestigkeitsmodifizierungsmittel für das harte Harz, wobei das Modifizierungsmittel wenigstens zwei Phasen enthält, wobei wenigstens eine davon elastomer ist und wenigstens eine hart ist, und wobei das Modifizierungsmittel mit hartem Polymeren, das keine elastomere Phase enthält, beschichtet und/oder agglomeriert ist, wobei das Gewichtsverhältnis des beschichteten und/oder agglomerierten harten Polymeren zu dem Schlagfestigkeitsmodifizierungsmittel 0,1:99,9 bis 10:90 beträgt.

2. Masse nach Anspruch 1, dadurch gekennzeichnet, daß das Verhältnis 1:99 bis 3:97 beträgt.

3. Verfahren zur Herstellung einer Masse gemäß einem der vorhergehenden Ansprüche, dadurch gekennzeichnet, daß schlagfestigkeitsmodifizierungsmittelteilchen mit dem harten Polymeren beschichtet und/oder agglomeriert werden.

4. Verfahren nach Anspruch 3, dadurch gekennzeichnet, daß eine Emulsion des harten nichtelastomeren Polymeren in eine Aufschlämmung aus koaguliertem Schlagfestigkeitsmodifizierungspolymerem eingeführt wird und die erhaltene Mischung anschließend koaguliert und getrocknet wird.

5. Masse oder Verfahren nach einem der vorhergehenden Ansprüche, dadurch gekennzeichnet, daß die elastomere Komponente 50 bis 90 Gew.-% des Vielphasenmodifizierungspolymeren ausmacht.

6. Masse oder Verfahren nach einem der vorhergehenden Ansprüche, dadurch gekennzeichnet, daß das harte nichtelastomere Polymere eine Tg von mehr als 25°C besitzt und wenigstens 80 Gew.-% Einheiten eines oder mehrerer der Monomeren Methylmethacrylat, Styrol, α-Methylstyrol und Butylmethacrylat aufweist.

7. Masse oder Verfahren nach Anspruch 6, dadurch gekennzeichnet, daß das harte Polymere ein Copolymeres aus Methylmethacrylat und Ethylacrylat in einem Gewichtsverhältnis von 99:1 bis 80:20 ist.

8. Masse oder Verfahren nach einem der vorhergehenden Ansprüche, dadurch gekennzeichnet, daß die koagulierten oder agglomerierten Schlagfestigkeitsmodifizierungsteilchen einen durchschnittlichen Durchmesser von 80 bis 250 nm (800 bis 2500 Å) besitzen.

9. Masse oder Verfahren nach einem der vorhergehenden Ansprüche, dadurch gekennzeichnet, daß das Schlagfestigkeitsmodifizierungspolymere ein Vielphasencopolymeres mit einer ersten elastomeren Phase und einer oder mehreren anschließenden härteren Phasen ist.

10. Masse oder Verfahren nach einem der vorhergehenden Ansprüche, dadurch gekennzeichnet, daß die elastomere Phase Einheiten eines oder mehrerer der Monomeren Buradien, Isopren, Chloropren und Alkylacrylaten mit 4 bis 10 Kohlenstoffatomen aufweist und eine oder mehrere der harten Phasen mehr als 50 Gew.-% Einheiten von Ethylmethacrylat, Methylmethacrylat, Butylmethacrylat, Styrol, α-Methylstyrol, Acrylnitril, Methacrylnitril, Vinylbromid und/oder Vinylchlorid aufweist.

**Revendications**

1. Une composition utile pour la modification du choc de polymères durs tels que des homopolymères et copolymères de chlorure de vinyle, de styrène et/ou de méthacrylate de méthyle, comprenant des particules de modificateur de choc pour la résine dure, le modificateur contenant au moins deux couches dont au moins une est élastomère et au moins une est dure, lequel modificateur est enrobé et/ou aggloméré avec un polymère dur qui ne contient pas une couche élastomère, le rapport pondéral du polymère dur enrobé et/ou aggloméré au modificateur de choc étant de 0,1/99,9 à 10/90.

2. Une composition comme revendiqué dans la revendication 1 dans laquelle le rapport est de 1/99 à 3/97.

3. Un procédé pour la production d'une composition comme revendiqué dans l'une quelconque des revendications précédentes qui comprend l'enrobage et/ou l'agglomération des particules de modificateur de choc avec le polymère dur.

4. Un procédé comme revendiqué dans la revendication 3 qui comprend l'introduction d'une émulsion du polymère dur non élastomère dans une suspension du polymère modificateur de choc coagulé, puis la coagulation et le séchage du mélange obtenu.

5. Une composition ou un procédé comme revendiqué dans l'une quelconque des revendications précédentes où le composant élastomère constitue 50 à 90% en poids du polymère modificateur à couches multiples.

6. Une composition ou un procédé comme revendiqué dans l'une quelconque des revendications précédentes où le polymère non élastomère dur a une Tg supérieure à 25°C et comprend au moins 80% en poids de motifs d'un ou plusieurs des monomères: méthacrylate de méthyle, styrène, α-méthylstyrène et méthyacrylate de butyle.

7. Une composition ou procédé comme revendiqué dans la revendication 6 où le polymère dur est un copolymère de méthyacrylate de méthyle et d'acrylate d'éthyle dans un rapport pondéral de 99/1 à 80/20.

8. Une composition ou procédé comme revendiqué dans l'une quelconque des revendications précédentes où les particules de modificateur de choc coagulé ou aggloméré ont un diamètre moyen de 80 à 250 nm (800 à 2 500 Å).

9. Une composition ou procédé comme revendiqué dans l'une quelconque des revendications précédentes où le polymère modificateur de choc est un copolymère à couches multiples ayant une première couche élastomère et une ou plusieurs couches successives plus dures.

10. Une composition ou procédé comme revendiqué dans l'une quelconque des revendications précédentes où la couche élastomère comprend des motifs d'un ou plusieurs des monomères:butadiène, isoprène, chloroprène et acrylates d'alcoyle ayant 4 à 10 atomes de carbone et une ou plusieurs des couches dures comprennent plus de 50% en poids de motifs de méthacrylate d'éthyle, méthacrylate de méthyle, méthacrylate de butyle, styrène, α-méthylstyrène, acrylonitrile, méthylacrylonitrile, bromure de vinyle et/ou chlorure de vinyle.